(19) Europäisches Patentamt / European Patent Office / Office européen des brevets

(11) **EP 1 923 568 B1**

(12) **EUROPÄISCHE PATENTSCHRIFT**

(45) Veröffentlichungstag und Bekanntmachung des Hinweises auf die Patenterteilung:
**31.07.2013 Patentblatt 2013/31**

(51) Int Cl.:
**F03D 7/02** (2006.01)　　　　**F03D 7/04** (2006.01)

(21) Anmeldenummer: **07017175.6**

(22) Anmeldetag: **01.09.2007**

(54) **Verfahren zum Betrieb einer Windenergieanlage im leistungslimitiertenen Betrieb**

Method of operating a wind turbine in reduced output power mode

Procédé de fonctionnement d'éolienne dans un mode à puissance limitée

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **16.11.2006 DE 102006054768**

(43) Veröffentlichungstag der Anmeldung:
**21.05.2008 Patentblatt 2008/21**

(73) Patentinhaber: **Nordex Energy GmbH**
**22848 Norderstedt (DE)**

(72) Erfinder:
• **Kabatzke, Wolfgang, Dr.**
**21502 Geesthacht (DE)**
• **Jurkat, Mark**
**22844 Norderstedt (DE)**
• **Harms, Ulrich**
**22399 Hamburg (DE)**

(74) Vertreter: **Schildberg, Peter**
**Hauck Patent- und Rechtsanwälte**
**Neuer Wall 50**
**20354 Hamburg (DE)**

(56) Entgegenhaltungen:
**EP-A- 1 798 413**

• **MULJADI E ET AL: "Pitch-controlled variable-speed wind turbine generation" INDUSTRY APPLICATIONS CONFERENCE, 1999. THIRTY-FOURTH IAS ANNUAL MEETI NG. CONFERENCE RECORD OF THE 1999 IEEE PHOENIX, AZ, USA 3-7 OCT. 1999, PISCATAWAY, NJ, USA,IEEE, US, Bd. 1, 3. Oktober 1999 (1999-10-03), Seiten 323-330, XP010355180 ISBN: 978-0-7803-5589-7**
• **VAN DER HOOFT E L ET AL: "Wind turbine control algorithms" ECN LITERATURE REVIEW, XX, XX, Bd. ECN-C-03-111, 1. Dezember 2003 (2003-12-01), Seiten 1-89, XP003008410**
• **BARSALI S ET AL: "Energy storage evaluation for controlling and managing wind generation in a small island grid", CIGRÉ FIFTH SOUTHERN AFRICA REGIONAL CONFERENCE MEETING TODAY S CHALLENGES FOR TOMORROW S POWER INDUSTRY,, 24 October 2005 (2005-10-24), pages 1-6, XP007916850, ISBN: 978-0-620-35099-0**
• **HAU E ED - HAU E: "Windkraftanlagen Grundlagen, Technik, Einsatz, Wirtschaftlichkeit passage", 1 January 2003 (2003-01-01), WINDKRAFTANLAGEN GRUNDLAGEN, TECHNIK, EINSATZ, WIRTSCHAFTLICHKEIT, SPRINGER VERLAG, DE, PAGE(S) 1 - 4, XP007920604, ISBN: 3-540-42827-5 * page 491 - page 493 ***

**Beschreibung**

Die vorliegende Erfindung betrifft ein Verfahren zur Steuerung einer Windenergieanlage in einem leistungslimitierten Betriebsmodus, der auch als leistungsbegrenzter Betrieb bezeichnet wird.

Neben dem Standardbetrieb, in dem die Windenergieanlage ihre Leistung entsprechend dem vorhandenen Windangebot bis zu einer möglichen Maximalleistung abgibt, kann eine Windenergieanlage auch leistungslimitiert betrieben werden. Diese Betriebsart ist insbesondere dann wichtig, wenn mehrere Windenergieanlagen in einem Windpark zusammengefaßt sind und eine Steuerung der Leistung aus dem Windpark wie bei einem Kraftwerk erfolgen soll. Die Steuerung durch den Windpark oder das Energieversorgungsunternehmen geben dabei der Windenergieanlage in dem leistungsbegrenzten Betriebsmodus einen Sollwert für die maximal einzuspeisende Leistung vor, insbesondere für die maximal einzuspeisende Wirkleistung.

Im leistungsbegrenzten Betrieb ergeben sich eine Reihe von technischen Problemen. Einerseits wird die Windenergieanlage auch im leistungsreduzierten Betrieb mit Drehzahlen betrieben, die dem Standardbetrieb entsprechen und somit zu hoch für die erzeugte Leistung sind. Auf diese Weise erfolgt eine unnötige Geräuschentwicklung. Weiterhin hat sich herausgestellt, daß im leistungsreduzierten Betrieb Windenergieanlagen mit einer Drehmomentsteuerung und einer Rotorblattsteuerung Betriebszustände hinsichtlich Drehzahl und Drehmoment annehmen können, die zu einer unnötigen Belastung der Windenergieanlage führen und nur schlecht gesteuert werden können.

S. Barsali et al. "Energy Storage Evaluation for Controlling and Managing Wind Generation in a Small Island Grid", XP 007916850, beschreibt eine Leistungskennlinie für einen leistungsreduzierten Betrieb einer Windenergieanlage in einem schwachen Inselnetz.

Der Erfindung liegt die Aufgabe zugrunde, ein Verfahren zum Betrieb einer Windenergieanlage im leistungslimitierten Betrieb bereitzustellen, das die Möglichkeit schafft, die Windenergieanlage auch in diesem Betriebsmodus zuverlässig im Hinblick auf Drehmoment und Drehzahl zu steuern.

Erfindungsgemäß wird die Aufgabe durch ein Verfahren mit den Merkmalen aus Anspruch 1 gelöst. Vorteilhafte Ausgestaltungen bilden die Gegenstände der Unteransprüche.

Das erfindungsgemäße Verfahren stellt auf den Betrieb einer Windenergieanlage ab, die eine Rotorblattsteuerung, eine Drehmomentsteuerung und eine Steuereinheit besitzt. Die Steuereinheit gibt einen Sollwert für die einzuspeisende Leistung vor. Die Steuereinheit kann dabei den Sollwert selbst generieren. Alternativ ist es auch möglich, daß die Steuereinheit von einer Parksteuerung der Windenergieanlage und/oder einer Netzüberwachung des Energieversorgungsunternehmens Signale erhält, die einen leistungslimitierten Betriebsmodus auslösen. Zusätzlich zu dem Signal, das das Umschalten in den leistungslimitierten Betriebsmodus auslöst, kann auch der Sollwert der einzuspeisenden Leistung der Steuereinheit von extern vorgegeben werden. Die externe Vorgabe kann automatisch über einen Datenaustausch oder manuell erfolgen. Bei dem leistungsbegrenzten Betriebsmodus erfolgt durch die Drehmomentsteuerung eine Absenkung des Drehmoments derart, daß der Sollwert für die bereitgestellte Leistung nicht überschritten wird, wobei die Steuereinheit die Grenzdrehzahl entsprechend dem vorgegebenen Sollwert für die Leistung bestimmt. Der Wert der Grenzdrehzahl ist kleiner als der Nennwert ($n_{NA}$) für die Drehzahl. Das erfindungsgemäße Verfahren bietet den Vorteil, daß im leistungsbegrenzten Betriebsmodus, wenn die geforderte Leistung bereitgestellt wird, die Windenergieanlage mit einer spezifisch abgestimmten Drehzahl operiert. Ferner besitzt das Verfahren den Vorteil, daß die abhängig von dem Sollwert für das Moment bestimmte Drehzahl im Hinblick auf die Steuerung der gesamten Windenergieanlage gewählt werden kann. Es werden also Zustände der Windenergieanlage vermieden, bei denen Drehmoment und Drehzahl in einem für den Betrieb der Anlage ungünstigen Verhältnis zueinander stehen.

In einer bevorzugten Ausgestaltung wird die zu bestimmende Grenzdrehzahl proportional zum Sollwert der einzuspeisenden Leistung festgelegt. Bei dem erfindungsgemäßen Verfahren gilt: Je kleiner die Differenz zwischen dem Sollwert für die einzuspeisende Leistung und der Nennleistung im Normalbetrieb ist, um so kleiner ist die Differenz zwischen der Grenzdrehzahl und der Nenndrehzahl.

Bei einer bevorzugten Ausgestaltung des erfindungsgemäßen Verfahrens steuert die Rotorblattwinkelsteuerung den Anstellwinkel des Rotorblatts ab Erreichen der Grenzdrehzahl derart an, daß bis zu einem Maximalwert für die Drehzahl das Drehmoment linear abnimmt.

In einer bevorzugten Ausgestaltung wird bei Unterschreiten der Grenzdrehzahl das Drehmoment bis zu einer dritten Drehzahl annähernd konstant gehalten und bis zu einer vierten Drehzahl reduziert. In einer bevorzugten Weiterbildung wird nach Erreichen der vierten Drehzahl das Drehmoment unter Erhöhung der Drehzahl wieder auf eine Kennlinie des Standardbetriebs zurückgeführt.

Das erfindungsgemäße Verfahren wird nachfolgend anhand eines Ausführungsbeispiels näher erläutert.

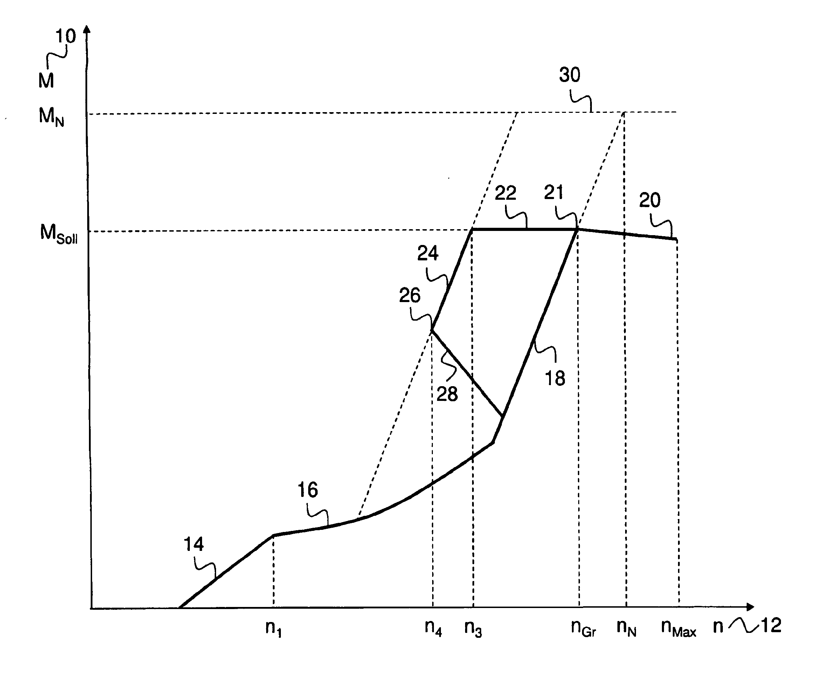

Die einzige Figur zeigt ein Kennlinienfeld für das Regelverhalten einer Windenergieanlage. In dem Kennlinienfeld ist das Generatormoment 10 über der Generatordrehzahl 12 aufgetragen. In einem ersten Anlaufabschnitt 14 des Kennlinienfeldes steigt das Generatormoment linear mit der Drehzahl an. Hieran schließt sich ab der Drehzahl $n_1$ ein zweiter Kennlinienabschnitt 16 an. Der zweite Kennlinienabschnitt gibt das Generatormoment gemäß der idealen Kennlinie für die aus dem Wind aufgenommene Leistung an. Der mathematische Zusammenhang zwischen Drehzahl und Leistung ergibt sich aus folgender Formel:

$$P_{Aero} = \left[ 2 \cdot \pi \cdot r_{rot} \cdot \frac{n_{gen}}{\ddot{u}_{getr}} \cdot \frac{1}{60} \cdot \frac{1}{\lambda(n_{rot})} \right]^3 \cdot \pi \cdot r_{rot}^2 \cdot \frac{\rho_{luft}}{2} \cdot c_p(n_{rot})$$

wobei $r_{rot}$ für den Radius des Rotorblatts steht, $n_{gen}$ für die Generatordrehzahl, $\ddot{u}_{getr}$ für das Übersetzungsverhältnis des Getriebes steht. $\lambda(n_{rot})$ bezeichnet die Schnellaufzahl des Rotors abhängig von der Drehzahl des Rotors, $\rho_{luft}$ bezeichnet die Dichte der Luft, während $c_p(n_{rot})$ einen Leistungsbeiwert für das Rotorblatt abhängig von der Drehzahl des Rotors beschreibt.

Der vorstehende Zusammenhang für die Leistung kann je nach technischer Ausgestaltung der Steuerung fortlaufend berechnet werden oder abhängig von der Drehzahl in einer Tabelle hinterlegt sein. Die Verwendung des physikalischen Zusammenhangs zwischen der aus dem Wind aufgenommenen Leistung und der Generatorleistung stellt sicher, daß in diesem Bereich der Drehzahl stets eine maximale Leistungsausbeute mit der Windenergieanlage erzielt wird.

An den zweiten Kennlinienabschnitt 16 schließt sich Kennlinienabschnitt 18 an, in dem ein rascher Anstieg des Drehmoments mit der Drehzahl erfolgt. Im Standardbetrieb der Windenergieanlage wird über den Kennlinienabschnitt 18 das Drehmoment bis zum Nennwert $M_N$ erhöht. Im leistungsbegrenzten Betrieb erfolgt die Steuerung der Windenergieanlage gemäß dem Kennlinienabschnitt 18 bis zu einer Grenzdrehzahl $n_{Gr}$. Bei der Grenzdrehzahl $n_{Gr}$ liegt der der Windenergieanlage vorgegebene Sollwert für das Moment $M_{Soll}$ vor. Bei dem erfindungsgemäßen Verfahren liegt in dem Kennlinienfeld der Punkt 21 ($n_{Gr}$, $M_{Soll}$) auf der Kennlinie, die im Standardbetrieb bei Übergang in den Vollastbetrieb für Drehzahl und Moment angesteuert wird.

Für Drehzahlen größer als die Grenzdrehzahl $n_{Gr}$ wird in einem anschließenden Kennlinienabschnitt 20 das Drehmoment vermindert, so daß die dem Drehmoment $M_{Soll}$ entsprechende Leistungsvorgabe für die verminderte Leistung eingehalten wird. Entlang dem Kennlinienabschnitt 20 erfolgt eine Erhöhung der Drehzahl bis zu einer Maximaldrehzahl $n_{Max}$.

Wie bei der Steuerung der Windenergieanlage im Standardbetrieb kann auch im leistungsbegrenzten Betrieb eine Hysterese in der Steuerung vorgesehen sein. Dies bedeutet, daß bei nachlassendem Wind und damit sinkender Drehzahl auch in einem Bereich kleiner als die Grenzdrehzahl $n_{Gr}$ zunächst noch der Sollwert für das Moment gehalten wird. Dieser Teil der Kennlinie ist mit 22 gekennzeichnet. Wird eine Drehzahl $n_3$ erreicht, so wird in dem Kennlinienabschnitt 24 das Drehmoment stark abgesenkt. Die Absenkung verläuft dabei entlang der Kennlinie 24, die in ihrer gedachten Verlängerung in den zweiten Kennlinienabschnitt 16 mündet. Vor Erreichen des zweiten Kennlinienabschnitts erfolgt ab dem Punkt 26 jedoch, wenn das Drehmoment hinreichend abgesenkt wurde, eine Drehzahlerhöhung, um Drehzahl und Drehmoment auf den dritten Kennlinienabschnitt 18 zurückzuführen. In dem dargestellten Ausführungsbeispiel erfolgt das Zurückführen auf den dritten Kennlinienabschnitt 18 bei Erreichen einer Drehzahl $n_4$. Der mit 26 gekennzeichnete Punkt, in dem der Kennlinienabschnitt 24 in den Kennlinienabschnitt 28 übergeht, liegt dabei auf der Verlängerung des Kennlinienabschnittes 24.

Die erfindungsgemäße Kennfeldregelung erlaubt eine drehzahloptimierte Steuerung der Windenergieanlage auch bei zu erzeugenden Leistungen, die kleiner als die Nennleistung der Anlage sind. Der Vorteil des Verfahrens besteht darin, daß die Windenergieanlage auch im leistungsbegrenzten Betrieb stabil gesteuert werden kann. Gerade im Drehzahlbereich um die Grenzdrehzahl $n_{Gr}$ herum wird die Windenergieanlage für die vorgegebene Leistung zuverlässig betrieben. Auch unnötig hohe Drehzahlen werden gegenüber dem Standardbetrieb vermieden. Die Kennlinien des Standardbetriebs sind zur besseren Übersicht gestrichelt als Kennlinien 30 eingezeichnet, wobei auch im Standardbetrieb eine Steuerung in Form einer Hysterese erfolgen kann. Im Standardbetrieb erfolgt eine Regelung der Drehzahl um den Wert der Nenndrehzahl herum.

## Patentansprüche

1. Verfahren zum Betrieb einer Windenergieanlage mit einer Rotorblattsteuerung, einer Drehmomentsteuerung und einer Steuereinheit, die in einem leistungsbegrenzten Betriebsmodus einen Sollwert für die einzupeisendet Leistung vorgibt, der kleiner als der Nennwert für die einzuspeisende Leistung ist, und die ab einer Grenzdrehzahl ($n_{Gr}$) durch die Drehmomentsteuerung das Drehmoment derart absenkt, daß der vorgegebene Sollwert für die einzuspeisende Leistung nicht überschritten wird, wobei die Grenzdrehzahl ($n_{Gr}$) zu einem Wert bestimmt wird:

   - der kleiner als der Nennwert für die Drehzahl ($n_N$) ist, und

- abhängig von dem vorgegebenen Sollwert für das Drehmoment ($M_{Soll}$) der Drehzahl entspricht, die sich im nicht leistungsbegrenzten Betriebsmodus der Windenergieanlage für einen Wert des Drehmoments ergibt, der dem vorgegebenen Sollwert für das Drehmoment ($M_{Soll}$) entspricht.

2. Verfahren nach Anspruch 1, **dadurch gekennzeichnet, daß** die Grenzdrehzahl ($n_{Gr}$) proportional zum Sollwert für die einzuspeisende Leistung ist.

3. Verfahren nach Anspruch 1 oder 2, **dadurch gekennzeichnet, daß** die Rotorblattwinkelsteuerung den Anstellwinkel des Rotorblatts ab Erreichen der Grenzdrehzahl ($n_{Gr}$) steuert, um bis zu einem Maximalwert für die Drehzahl ($n_{Max}$) das Drehmoment linear zu reduzieren.

4. Verfahren nach Anspruch 3, **dadurch gekennzeichnet, daß** bei Unterschreiten der Grenzdrehzahl ($n_{Gr}$) das Drehmoment bis zu einer dritten Drehzahl ($n_3$) konstant gehalten wird und bei Unterschreiten der dritten Drehzahl ($n_3$) reduziert wird.

5. Verfahren nach Anspruch 4, **dadurch gekennzeichnet, daß** die Drehzahl bis zu einer vierten Drehzahl ($n_4$) abnimmt und die Steuereinheit ab der vierten Drehzahl ($n_4$) die Drehzahl erhöht.

**Claims**

1. A method for operating a wind turbine including a rotor blade pitch control, a torque control and a control unit, in a power-limited operation mode the control unit presets a setpoint for the power to be supplied which is smaller than a nominal value for the power to be supplied and the control unit lowers the torque as from a limit rotational speed ($n_{Gr}$) by the torque control such that the presetted setpoint for the power to be supplied is not exceeded, wherein the limit rotational speed ($n_{Gr}$) is determined to a value:

   • which is smaller than the nominal value for the rotational speed ($n_N$), and
   • which, depending on the presetted setpoint for the torque ($M_{Soll}$), corresponds to the rotational speed which, in a non-power-limited operation mode of the wind turbine, results in for a value of the torque corresponding to the presetted setpoint for the torque.

2. The method according to claim 1, wherein the limit rotational speed ($n_{Gr}$) is proportional to the setpoint for the power to be supplied.

3. The method according to claim 1 or 2, wherein the rotor blade pitch control controls the angle of attack of the rotor blade as from reaching the limit rotational speed ($n_{Gr}$) for reducing linearly the torque up to a maximum value for the rotational speed ($n_{Max}$).

4. The method according to claim 3, wherein when falling below the limit rotational speed ($n_{Gr}$), the torque is kept constant until reaching a third rotational speed ($n_3$) and is reduced when falling below the third rotational speed ($n_3$).

5. The method according to claim 4, wherein the rotational speed decreases until reaching a fourth rotational speed ($n_4$) and the control unit raises the rotational speed upon reaching the fourth rotational speed ($n_4$).

**Revendications**

1. Procédé de fonctionnement d'une éolienne avec une commande de pale de rotor, une commande du couple et une unité de commande qui, dans un mode de fonctionnement à puissance limitée, prescrit une valeur de consigne pour la puissance à fournir qui est plus faible que la valeur nominale pour la puissance à fournir, et qui, à partir d'une vitesse de rotation limite ($n_{Gr}$) diminue le couple par la commande du couple de telle sorte que la valeur de consigne prescrite pour la puissance à fournir n'est pas dépassée, la vitesse de rotation limite ($n_{Gr}$) étant définie à une valeur :

   - qui est inférieure à la valeur nominale pour la vitesse de rotation ($n_N$), et
   - qui, en fonction de la valeur de consigne prescrite pour le couple ($M_{Soll}$), correspond à la vitesse de rotation qui résulte dans le mode de fonctionnement à puissance non limitée de l'éolienne pour une valeur du couple qui correspond à la valeur de consigne prescrite pour le couple ($M_{Soll}$).

2. Procédé selon la revendication 1, **caractérisé en ce que** la vitesse de rotation limite ($n_{Gr}$) est proportionnelle à la valeur de consigne pour la puissance à fournir.

3. Procédé selon la revendication 1 ou 2, **caractérisé en ce que** la commande de l'angle de pale de rotor commande l'angle d'attaque de la pale de rotor une fois atteinte la vitesse de rotation limite ($n_{Gr}$) pour réduire de façon linéaire le couple jusqu'à une valeur maximale pour la vitesse de rotation ($n_{Max}$).

4. Procédé selon la revendication 3, **caractérisé en ce que**, en cas de passage sous la vitesse de rotation limite ($n_{Gr}$), le couple est maintenu constant jusqu'à une troisième vitesse de rotation ($n_3$) et est réduit en cas de passage sous la troisième vitesse de rotation ($n_3$).

5. Procédé selon la revendication 4, **caractérisé en ce que** la vitesse de rotation diminue jusqu'à une quatrième vitesse de rotation ($n_4$), et **en ce que** l'unité de commande augmente la vitesse de rotation à partir de la quatrième vitesse de rotation ($n_4$).

10
M
$M_N$
$M_{Soll}$

30

20
21
22
18
24
26
28
16
14

$n_{Max}$  $n_N$  $n_{Gr}$  $n_3$  $n_4$  $n_1$  n  12